# EUROPEAN PATENT APPLICATION

(11) **EP 2 175 450 A1**
(43) Date of publication of application: **14.04.2010**
(21) Application number: 09252344.8
(22) Date of filing: 01.10.2009
(51) Int. Cl.: G11B 20/00, G11B 20/10, G11B 20/12, H04M 1/73, G11C 7/16

(54) **Mobile information terminal, information processing method and information processing program**

(30) Priority: 08.10.2008 JP 2008261177
(71) Applicant: Sony Ericsson Mobile Communications Japan, Inc., Tokyo (JP)
(72) Inventor: Komiya, Kozo, Tokyo (JP)
(74) Representative: Jackson, Jonathan Andrew

(57) **Abstract**

A mobile information terminal includes a battery, an external power supplier configured to be supplied with external power, a data processer configured to perform a predetermined processing regarding first data to convert the first data into second data, a recording section configured to record at least one piece of data, a saving controller configured to, while being supplied with external power through the external power supplier, cause the data processor to perform the predetermined processing regarding first data recorded in the recording section, and save the resultant second data into the recording section, and an outputting controller configured to, while being supplied with power from the battery, be directed to perform the predetermined processing regarding first data recorded in the recording section, and if the directed first data corresponds to the second data saved in the recording section, read out the corresponding second data saved in the recording section.

## Description

The present invention relates to mobile information terminals, information processing methods employed in the mobile information terminals and information processing programs.

Nowadays, among mobile information terminals, portable music reproducing devices, such as MPEG audio layer-3 (MP3) type players each having a function of reproducing music files including data which is compression-encoded in a so-called MP3 format, and mobile telephone terminals each having a function of reproducing music files the same as or similar to the function of portable music reproducing devices, are in widespread use. In these mobile information terminals, such as portable music reproducing devices, a limited-capacity memory is likely to be used as a recording medium for recording music data. Therefore, in such a mobile information terminal, in order to optimize a balance between a total amount of time of music data recordable into the limited-capacity memory and an acoustic quality of reproduced music signals, usually, the compression (encoding) of the music data into an encoded format used for the compression of speech signals, such as an MP3 format or an advanced audio coder (AAC) format, is performed. Further, the mobile information terminal reproduces music signals by decoding and sequentially converting the compressed music data, which is recorded in the limited-capacity memory, into a pulse-code-modulation (PCM) data format. Hereinafter, music files (blocks of music data) compressed into an encoding format for the compression of speech signals are referred to as compressed music files (blocks of compressed music data).

In addition, in Japanese Patent Application Publication No. 2000-299718, a mobile telephone device having a function of reproducing music data has been proposed. The mobile telephone device described in this publication includes a telephone controller configured to demodulate signals received via an antenna and output speech signals, further, a storage section configured to store compressed music data, and a data reproduction section configured to reproduce music data by reading out and decompressing the stored compressed music data, and further, the mobile telephone device is configured to select and output either the speech signals or the music signals.

Further, in Japanese Patent Application Publication No. 2001-308980, a mobile telephone device has been disclosed, in which, when the mobile telephone device decodes compressed music data and reproduces music signals under the condition where the mobile telephone device is connected to an adapter incorporating therein a battery operating as an external electric power source, by using the external electric power source inside the adapter, it is made possible to prevent consumption of electric power stored in a battery inside the mobile telephone device, due to the reproduction of music data.

Furthermore, in Japanese Patent Application Publication No. 2008-199108, a mobile telephone device has been disclosed, which is configured to save electric power consumed while the reproduction of music data is performed, by providing first and second reproduction modes as reproduction modes for the reproduction of music data, and reproducing audio data stored in advance by using the second reproduction mode, only when the conditions for commencement of the second reproduction mode are satisfied.

As described above, in a mobile information terminal, such as a mobile telephone terminal, including a function of reproducing music data, the music data is reproduced by performing decoding and sequential conversion of compressed music files recorded in memory into a pulse-code-modulation (PCM) data format.

In this operation, the processes of decoding music files which are subjected to encoding, such as a compression, have a large number of and complicated arithmetic operations, and as a result, consume a large amount of electric power. Therefore, in a mobile information terminal operating under the condition where electric power from a battery incorporated in the mobile information terminal is supplied, the reproduction of music files consumes a large amount of electric power stored in the battery, and as a result, leads to a disadvantage in that a total amount of time while the battery can continue to supply electric power is made smaller.

Accordingly, it is desirable to provide a mobile information terminal, an information processing method and an information processing program, which enable reduction of power consumption while reproducing blocks of encoded data, such as music files, stored in memory, and thereby, increase of a total amount of time while a battery incorporated in the mobile information terminal can continue to supply electric power.

An embodiment of the present invention is applied to a mobile information terminal which includes a battery section, an external electric power supplying section configured to be supplied with external electric power through a connecting section thereof which is configured so as to be capable of being connected to an external electric power source, a data recording section configured to record at least one piece of data, and a data processing section configured to perform a predetermined processing with respect to a piece of first data so as to convert the piece of first data into a piece of second data. In addition thereto, the mobile information terminal according to an embodiment of the present invention includes a data saving controller and a data outputting controller. While being supplied with external electric power through the external electric power supplying section, the data saving controller causes the data processing section to perform the predetermined processing with respect to at least one piece of first data recorded in the data recording section, and saves at least one piece of second data resulting from performing the predetermined processing into the data recording section. While being supplied with electric power from only the battery section, the data outputting controller is directed to perform the predetermined processing with respect to a piece of first data recorded in the data recording section, and in the case where the piece of first data targeted for the direction is a piece of first data corresponding to the piece of second data saved in the data recording section, the data outputting controller reads out the corresponding piece of second data saved in the data recording section.

That is, according to an embodiment of the present invention, while being supplied with external electric power, each piece of second data resulting from performing the predetermined processing with respect to a piece of first data recorded in the data recording section is saved in the data recording section. Further, while being supplied with electric power from only the battery section, processing is performed so as to read out pieces of second data saved in the data recording section to the greatest extent possible. Providing such a method reduces the probability of occurrence of a condition in which the predetermined processing with respect to a piece of first data is performed using electric power supplied from the battery section.

According to an embodiment of the present invention, while being supplied with external electric power, pieces of second data resulting from performing the predetermined processing with respect to pieces of first data are saved in the data recording section, and while being supplied with electric power from the battery section, the pieces of second data saved in the data recording section are read out, and thereby, it is possible to reduce consumption of electric power supplied from the battery section while reproducing, for example, music files and the like stored in the external memory. Further, according to an embodiment of the present invention, it is possible to increase a total amount of time while the battery section can continue to supply electric power by reducing consumption of electric power supplied from the battery section while reproducing music files and the like.

More particularly, the invention preferably relates to a mobile information terminal, an information processing method and an information processing program, which enable reproduction of encoded data such as a file of compressed speech data.

Various respective aspects and features of the invention are defmed in the appended claims. Combinations of features from the dependent claims may be combined with features of the independent claims as appropriate and not merely as explicitly set out in the claims.

Embodiments of the invention will now be described with reference to the accompanying drawings, throughout which like parts are referred to by like references, and in which:
Fig. 1 is a diagram illustrating an outline of a configuration of a mobile telephone terminal according to an embodiment of the present invention;
Fig. 2 is a diagram illustrating an example of a usage of a storage area of an external memory according to an embodiment of the present invention, and a condition in which no piece of data is stored in an unused area;
Fig. 3 is a diagram illustrating an example of a usage of a storage area of an external memory according to an embodiment of the present invention, and a condition in which an unused area is used as a reservation area, which includes decoded music files saved therein;
Fig. 4 is a diagram illustrating an example of a usage of a storage area of an external memory according to an embodiment of the present invention, and a condition in which, in order to newly store a still image file in a still-image file storage area, a part of a reservation area has been released;
Fig. 5 is a flowchart illustrating a flow of processes of decoding music files and saving the resultant decoded music files in a reservation area while being supplied with external electric power, according to an embodiment of the present invention; and
Fig. 6 is a flowchart illustrating a flow of processes of reproducing music files while being supplied with electric power from a battery incorporated in a mobile telephone terminal, according to an embodiment of the present invention.

Hereinafter, an embodiment of the present invention will be described with reference to drawings.

In addition, in this embodiment of the present invention, a mobile telephone terminal is given as an example thereof, however, obviously, the mobile telephone terminal, which will be hereinafter described, is just an example, and the present invention is not limited to this example.

### [An outline of a configuration of a mobile telephone terminal]

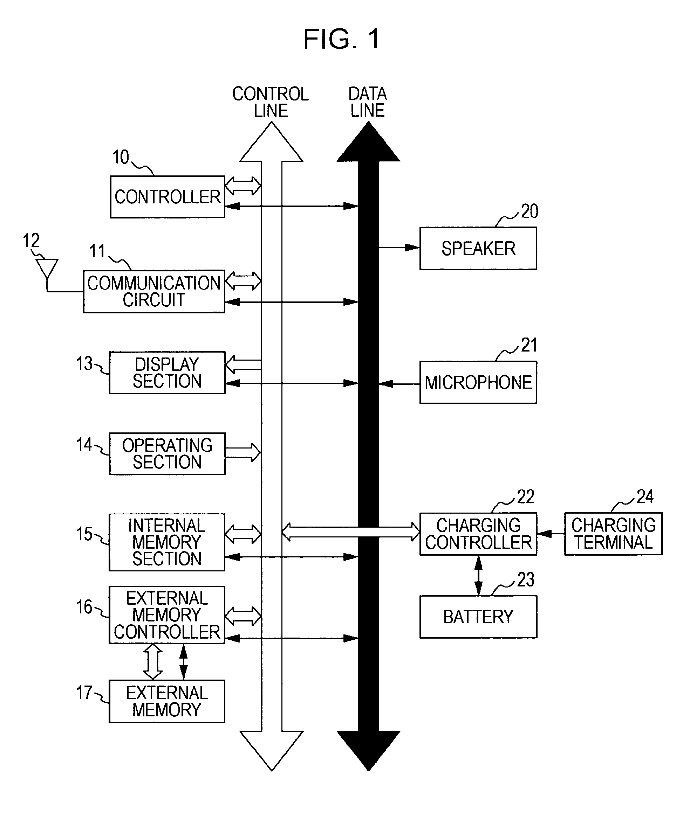

Fig. 1 is a diagram illustrating an outline of a configuration of a mobile telephone terminal according to an embodiment of the present invention.

In Fig. 1, a communication antenna 12 is, for example, a built-in antenna configured to transmit and receive signal-waves carrying data for speech communication and packet communication such as e-mail communication. A communication circuit 11 is configured to perform frequency-conversion, modulation, demodulation and the like, with respect to signals to be transmitted and received signals.

The speaker 20 functions as a speaker for outputting received speech, which is included in the mobile telephone terminal, and further, as a speaker for outputting a ringer (a ringing tone), an alarm sound, reproduced music sounds, speech with reproduced moving images, and performs digital-to-analog conversion of speech data supplied from a controller 10, further, converts the resultant speech signals to acoustic waves, and then, outputs the acoustic waves into the air.

The microphone 21 is a microphone for inputting speech and collecting external speech sounds, and converts acoustic waves into speech signals, further, performs analog-to-digital conversion with respect to the speech signals, and then, transmits the converted digital speech signals to the controller 10.

A display section 13 includes a display device, such as a liquid crystal display or an electro-luminescent display, and a display driving circuit for driving the display device, and on the display device, displays, for example, various characters and messages used for e-mail and the like, and further, still images, moving images and the like.

An operating section 14 includes individual operating components mounted on a frame, which is omitted from illustration in Fig. 1, included in the mobile telephone terminal according to this embodiment, such as a numeric keypad, a power on/off key, a call originating key, a call terminating key, an arrow key, and a jog dial, and further, an operation signal generator configured to generate operation signals, upon detection of operations of the above-described operating components.

An internal memory section 15 includes a read only memory (ROM) and a random access memory (RAM). The ROM includes a writable storage medium, such as a NAND-type flash memory, and stores therein control programs such a program for an operating system (OS), control programs causing the controller 10 to perform control of individual sections, an information processing program according to the present invention, various kinds of application programs, and further thereto, various kinds of initial setting values, font related data, individual dictionaries related data, a model name and its property related information and terminal identification information. The RAM stores temporally used data therein as a working area for various kinds of data processing performed by the controller 10.

An external memory 17 includes a flash memory or the like which is attachable/detachable and is also rewritable, such as a so-called secure digital (SD) memory card. In this external memory 17, compression-encoded music files, compression-encoded moving-image files and compression-encoded still-image files, which are examples of first data according to the present invention, respectively, are recorded. In addition, in the external memory 17, user data files and other kinds of data can be recorded.

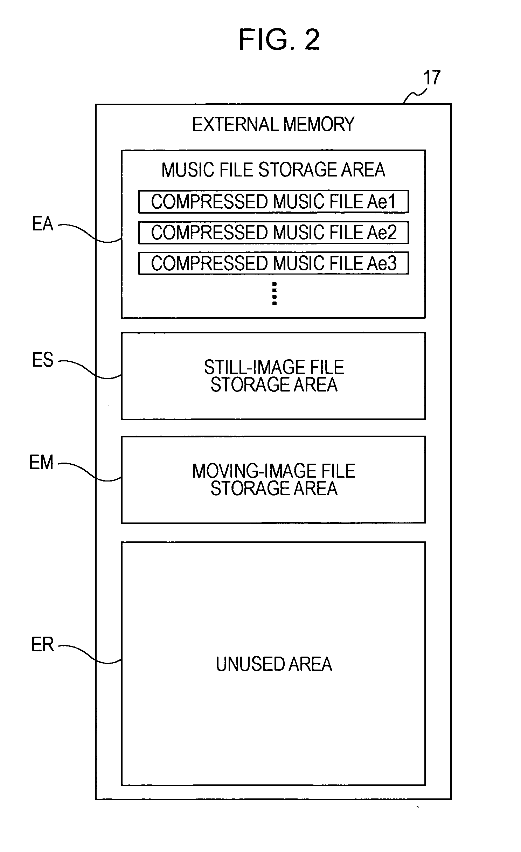

Fig. 2 is a diagram illustrating an example of a usage of the storage area of the external memory 17.

In this example shown in Fig. 2, a case in which the storage area in the external memory 17 is divided into four areas, a first area being a music file storage area EA including compression-encoded music files stored therein, a second area being a still-image file storage area ES including compression-encoded still image files stored therein, a third area being a moving-image file storage area EM including compression-encoded moving image files stored therein, a fourth area being an unused area ER, is provided. Additionally, in this example shown in Fig. 2, a case in which, in the music file storage area EA, compressed music files Ae1, Ae2 and Ae3 are stored as compression-encoded music files, is provided.

In addition, in this embodiment, as an example of the external memory 17, an SD memory card or the like capable of being attached/detached is assumed, but the external memory 17 may be, for example, a hard disc drive (HDD) or the like. Further, it is not necessary to provide the external memory 17, but, in this case, blocks of data to be stored in the external memory 17 may be stored in the internal memory section 15. That is, in this case, the music file storage area EA, the still-image storage area ES, the moving-image storage area EM, and the unused area (reserved area) ER are included in the internal memory section 15.

An external memory controller 16 is configured to, in accordance with control performed by the controller 10, manage the storage areas included in the external memory 17, and perform writing/reading of data into/from the external memory 17.

A battery 23 is a second battery configured to supply electric power to individual sections of the mobile telephone terminal according to this embodiment.

A charging terminal 24 is a terminal which is an example of a connecting section according to the present invention, and is configured to, when the mobile telephone terminal according to this embodiment is placed on a battery charger, be electrically connected to a terminal of the battery charger.

A charging controller 22 functions as an example of an external electric power supplying section according to the present invention, and is configured to monitor the voltage level of the battery 23, and concurrently, perform control so as to supply the battery 23 with electric power supplied through the charging terminal 24. Further, even while the battery 23 is supplied with electric power supplied from through the charging terminal 24, the charging controller 22 is configured to, in the case where it is necessary to supply the mobile telephone terminal itself with electric power, allow the mobile telephone terminal itself to be supplied with electric power being supplied through the charging terminal 24.

In addition, in this embodiment, an example in which external charging electric power is supplied through the charging terminal 24 is provided, but a configuration may be provided that allows charging electric power to be supplied by using no point of contact for charging, via, for example, a planar coil, which is made by forming wired conductor having electrical conductivity into a scroll-shaped part. In this case, this planar coil is an example of the connecting section according to the present invention.

The controller 10 includes a central processing unit (CPU), and is configured to perform control, and the like, of basic processes with respect to various kinds of signal processing and also individual sections in the mobile telephone terminal according to this embodiment, such as control of communication performed in the communication circuit 11. Further, in this embodiment of the present invention, the controller 10 performs, for example, a decoding process, as an example of a predetermined process according to the present invention, with respect to a compressed music file, which is an example of first data according to the present invention, and performs various kinds of control operations of the process. In the same way as or a way similar to that described above, the controller 10 performs a decoding process, as an example of a predetermined process according to the present invention, with respect to a compressed moving-image file or a compressed still-image file, each of which is an example of first data according to the present invention, and performs various kinds of control operations of the process. Obviously, it is possible for the controller 10 to compress non-encoded music files, non-encoded image files and the like, by performing an encoding process on them. Furthermore, the controller 10 is configured to execute various kinds of control programs and application programs stored in the internal memory section 15, and perform processing and the like with respect to various kinds of data associated with these programs. Moreover, in this embodiment, the controller 10 performs control of the external memory controller 16 so as to cause the external memory controller 16 to perform writing/reading data into/from the external memory 17. As described below in detail, according to this embodiment, the controller 10 is configured to execute an example of an information processing program according to the present invention, and thereby, execute examples of functions of a reservation area reserving section, a reservation area determining section, a reservation area saving controller and a data outputting controller according to the present invention. That is, processing performed by the controller 10 executing an example of an information processing program according to the present invention is such that, while being supplied with external electric power, processes of decoding compressed music files and storing the resultant data into the unused area are performed in accordance with a predetermined order of priority, and while being supplied with electric power from the battery, processes of digital-to-analog conversion of PCM data, and the like, which is included in the decoded music files stored in the unused area, are performed.

As for the rest, which is omitted from illustration in Fig. 1, the mobile telephone terminal according to this embodiment includes individual functional components, which are provided in a general mobile telephone terminal, such as a digital camera section configured to take picture-images, light-emitting diodes (LEDs) and a driving circuit thereof for key illumination and an incoming alert indication, a short-distance wireless communication section configured to perform short-distance communication using a so-called Bluetooth ^{™} scheme, an ultra wide band (UWB) scheme, a wireless local area network (wireless LAN) scheme and the like, a non-contact communication processing section including a non-contact IC card function and a reader/writer function, a global positioning system (GPS) communication section, a receiving tuner and an AV codec section for digital broadcasting, and a timer (a clock section).

### [Processes of decoding and saving compressed music files into a reservation area while being supplied with external electric power]

In the foregoing mobile telephone terminal according to this embodiment of the present invention, while being supplied with external electric power through the charging terminal 24, and further, in the case where an unused area in the external memory 17 has a sufficient space, the controller 10 functions as a reservation area reserving section configured to reserve the unused area as a reservation area.

Further, in this embodiment of the present invention, while being supplied from external electric power through the charging terminal 24, and further, in the case where the reservation area has a sufficient capacity, the controller 10 functions as a reservation area saving controller configured to perform control so as to cause compressed music files saved in the external memory 17 to be decoded and the resultant decoded music files to be saved in the reservation area. In addition, in this case, the process of decoding the compressed music files and the process of saving the resultant decoded music files in the reservation area are carried out regardless of whether a command for directing the mobile telephone terminal to reproduce music files is entered by, for example, a user, or not. Additionally, it can be set in advance by a user by means of, for example, a menu setting or the like, whether the function as the reservation area saving controller is to be executed, or not, while being supplied with external electric power.

That is, while being supplied with external electric power, in accordance with predetermined orders of priority given to compressed music files, the controller 10 sequentially selects a compressed music file having an order of priority from among compressed music files stored in the music file storage area EA of the external memory 17, further, decodes the selected music file, and saves the resultant decoded music file in the reservation area ER.

Here, in this embodiment, the predetermined orders of priority are determined by selecting, for example, any one of the following settings of orders of priority, first to fourth.

A first setting of orders of priority is such that, in accordance with orders of priority which are set to the compressed music files in advance by a user, the processes of decoding and saving the music files into the reservation area ER are performed.

A second setting of orders of priority is such that, in accordance with a date and time, for example, in accordance with an order of priority commencing from the latest date and time, when a certain compressed music file is added to (i.e., is newly stored in) the music file storage area EA, the processes of decoding and saving the music files into the reservation area ER are performed.

A third setting of orders of priority is such that, in accordance with the number of reproduction, for example, in accordance with an order of priority commencing from the largest number of reproduction, with respect to compressed music files which have been decoded and reproduced so far, the processes of decoding and saving the music files into the reservation area ER are performed.

A fourth setting of orders of priority is such that, in the case where a playing list for shuffling reproduction is created in advance, in accordance with the playing list for shuffling reproduction, the processes of decoding and saving the music files into the reservation area ER are performed.

Further, in the case where one of the settings of orders of priority, first to fourth, is determined, in accordance with the determined orders of priority, the controller 10 sequentially selects and decodes a relevant compressed music file from among compressed music files stored in the music file storage area EA, and save the resultant decoded music file in the reservation area ER. In addition, with respect to the selection of one of these first to fourth settings of orders of priority, it is possible for a user to perform setting in advance, for example, by using a menu setting or the like.

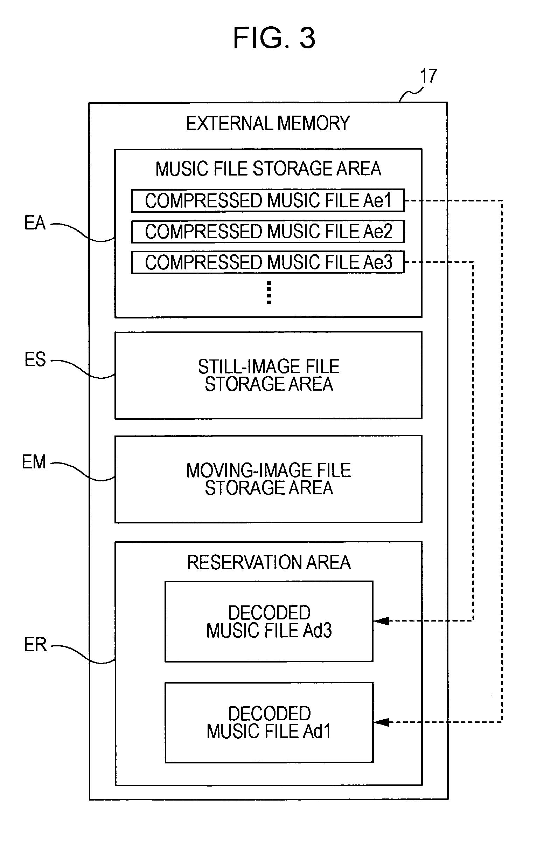

In Fig. 3, a condition in which, in an example of a usage of the external memory 17 shown in Fig. 2, while being supplied with external electric power, in accordance with predetermined orders of priority, relevant compressed music files are selected from among compressed music files stored in the music files storage area EA, further decoded, and the resultant decoded music files are saved in the reservation area ER, is shown.

That is, in this example shown in Fig. 3, assuming that, with respect to compressed music files Ae1, Ae2 and Ae3 recorded in the music file storage area EA, an example of the predetermined orders of priority is such that these music files are to be selected and decoded in accordance with such an order of priority as follows; Ae3, Ae1, Ae2, first of all, the controller 10 selects the compressed music file Ae3 having the highest order of priority. Further, the controller 10 decodes the compressed music file Ae3 which has been firstly selected, and saves the resultant decoded music file Ae3 in the reservation area ER. Secondly, the controller 10 selects and decodes the compressed music file Ae1 having the second highest order of priority, and saves the resultant decoded music file Ae1 in the reservation area ER. Furthermore, the controller 10 selects the compressed music file Ae2 having the third highest order of priority. However, in this case, the reservation area ER does not have an amount of space sufficient to save a decoded music file, and thus, with respect to the third compressed music file Ae2, the controller 10 performs decoding thereof, but does not perform saving thereof in the reservation area ER, or alternatively, does not perform decoding itself thereof.

Further, in this embodiment, as shown in this example of Fig. 3, the controller 10 functions as a reservation area determining section configured to determine whether at least one decoded music file can be saved in the reservation area ER, or not, that is, whether the reservation area ER has an amount of space more than or equal to an estimated amount of data of at least one decoded music file to be saved in the reservation area ER, or not.

Here, the determination as to whether at least one decoded music file can be saved in the reservation area ER, or not, can be made by using a method, for example, in which an amount of data resulting from decoding of a compressed music file to be subsequently saved in the reservation area ER is compared with an amount of space of the reservation area ER as of then. That is, in this case, the controller 10 determines whether the decoded music file can be saved in the reservation area ER, or not, by determining whether an amount of space of the reservation area ER as of then is more than or equal to an estimated amount of data resulting from decoding of the compressed music file to be subsequently saved in the reservation area ER.

Further, as another example, the determination as to whether the decoded music file can be saved in the reservation area ER, or not, can be made by using a method, for example, in which an amount of space of the reservation area ER as of then is compared with a predetermined threshold capacity value. That is, in this case, the controller 10 determines whether the decoded music file can be saved in the reservation area ER, or not, by determining whether an amount of space of the reservation area ER as of then is more than or equal to the predetermined threshold capacity value. This predetermined threshold capacity value can be set to, for example, a capacity value determined on the basis of a maximum amount of data of a decoded music file, which can be estimated on the assumption that each of the compressed music files is to be decoded, that is, a capacity value at least more than the estimated maximum amount of data of a decoded music file.

In addition, in this embodiment, an example in which only compressed music files each having an order of priority are decoded and saved in the reservation area ER, is provided, however, for example, in the case where an amount of space of the reservation area ER is sufficient for music files resulting from decoding of all of compressed music files to be saved, handling may be performed so that all of the compressed music files are decoded and saved in the reservation area ER.

### [An automatic releasing process with respect to a reservation area]

In the case where decoded music files are saved in the reservation area in such a way as described above, for example, when a different type of piece of data, such as a still image file or a moving image file, is to be newly recorded in the external memory 17, the controller 10 functions as the reservation area reserving section configured to automatically release a part of the reservation area ER. Further, in the mobile telephone terminal according to this embodiment, the released area is added to the still-image file storage area ES or the moving-image file storage area EM, and thereby, the additional different type of piece of data, such as a still image file or a moving image file, can recorded.

Here, in this embodiment, when a part of the reservation area ER is to be released, from among decoded music files saved in the reservation area ER, decoded music files are selected and deleted in an order commencing from a decoded music file having the lowest order of priority, and thus, a space necessary for the different type of piece of data to be recorded is reserved.

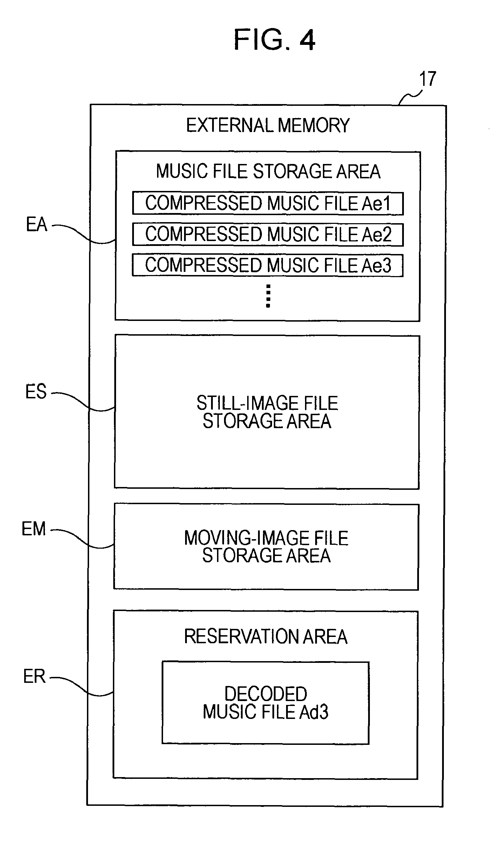

In Fig. 4, a condition in which, in an example of a usage of the external memory 17 shown in Fig. 3, for example, in order to record a new still image file in the still-image file storage area ES, from among decoded music files Ad3 and Ad1 stored in the reservation area ER, the decoded music file Ad1 having a lower order of priority has been deleted, is illustrated.

That is, in this example shown in Fig. 4, a condition in which the area of the still-image file storage area ES is increased in comparison with that of the example shown in Fig. 3 due to the addition of a new still image file, and in contrast, in the reservation area ER, only the decoded music file Ad3 remains after the decoded music file Ad1 has been deleted, is illustrated.

In addition, in Fig. 4, an example in which a still image file is newly recorded is provided, but, obviously, when, in order to newly record a moving image file or a piece of user data other than the still image file and the moving image file, it is necessary to reserve a space, a part of the reservation area is released in the same way as or in a way similar to that as described above.

As described above, according to this embodiment, decoded music files saved in the reservation area ER are handled as a block of data for which users do not have to perform a direct operation and the like, and the reservation area ER is configured to be automatically released when necessary. Therefore, the reservation area ER appears as a space (an unused area) for users, and thus, users can store different type of data, such as still-image files, with no concern, without paying any particular attention on whether any decoded music files are saved in the reservation area ER, or not.

### [A reproduction process with respect to music files while being supplied with electric power from a battery]

Under the condition where decoded music files are saved in the reservation area ER as described above, and the mobile telephone terminal is not supplied with external electric power subsequent to removal of the mobile telephone terminal from a charging stand therefore, that is, under the condition where the mobile telephone is operating on electric power supplied from only the battery 23, for example, when a music file is reproduced, the mobile telephone terminal according to this embodiment operates as described below.

That is, in this embodiment, under the condition where the mobile telephone terminal is operating on electric power supplied from only the battery 23, in the case where a music file targeted for reproduction is a music file corresponding to an decoded music file saved in the reservation area ER, the controller 10 functions as a data outputting controller operative to read out the decoded music file as it is. In addition, the decoded music file read out from the reservation area ER is digital-to-analog converted, and then, is outputted from the speaker 20.

In contrast, under the condition where the mobile telephone terminal is operating on electric power supplied from only the battery 23, in the case where a music file targeted for reproduction is not saved in the reservation area ER, the controller 10 reads out a compressed music file corresponding to the music file targeted for reproduction from the music file storage area EA, and then, decodes the read-out compressed music file. Further, the resultant decoded music file is digital-to-analog converted and is outputted from the speaker 20 by the controller 10.

In this way, according to this embodiment, under the condition where the mobile telephone terminal is operating on electric power supplied from only a battery incorporated therein, in the case where a music file targeted for reproduction is saved in the reservation area ER, only processes are provided that allow the decoded music file to be read out from the reservation area ER and be digital-to-analog converted.

Therefore, providing such processes according to this embodiment enables, for example, reduction of a large amount of power consumption incurred in decoding of compressed music files, and as a result, reduction of an amount of electric power supplied from the battery 23, and thus, increase of a total amount of time while the battery can continue to supply electric power and a total amount of time while pieces of music can be reproduced on the electric power supplied from only the battery 23. In particular, in the case where only the reproduction of music files is performed, relative to a total amount of electric power consumed by the mobile telephone terminal, a ratio of electric power consumed in decoding of compressed music files is so high that providing such a method as used in the mobile telephone terminal according to this embodiment enables increase of the reproduction time of music files to a significant degree. In addition, while being supplied with external electric power, decoding processes in conjunction with saving music files in the reservation area ER are performed by using the external electric power, and thus, no electric power stored in the battery 23 is consumed.

### [A flowchart of processes of decoding and saving compressed music files into a reservation area while being supplied with external electric power]

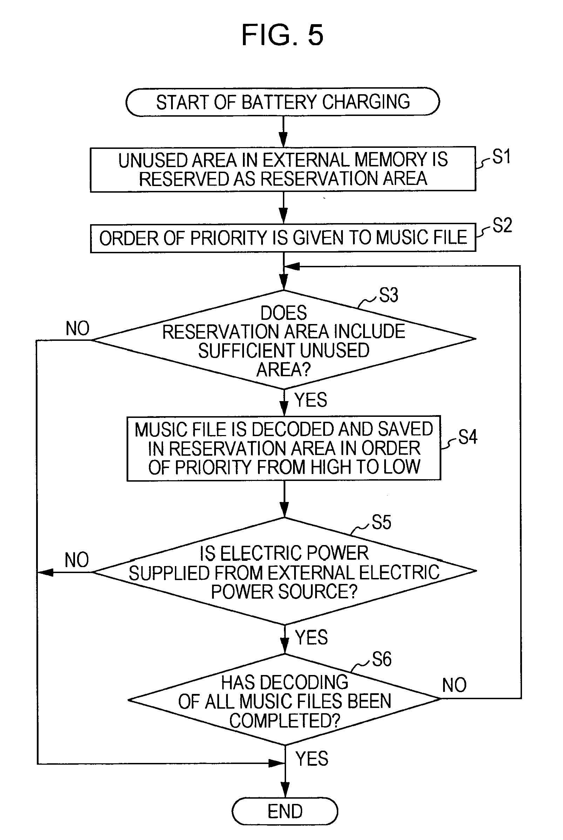

Fig. 5 is a flowchart illustrating a flow of processes of decoding music files stored in the music file storage area EA and saving the resultant decoded music files in the reservation area ER while being supplied with external electric power, according to an embodiment of the present invention. In addition, processes included in this flowchart shown in Fig. 5 are those performed in conjunction with the execution of an example of an information processing program according to the present invention, performed by the controller 10 according to this embodiment.

In this flowchart shown in Fig. 5, during step S1, once the controller 10 confirms that the battery 23 is charging through the charging terminal 24 which is connected to an external electric power source, by using information from the charging controller 22, the controller 10 causes the external memory controller 16 to reserve a space (i.e., the unused area ER) of the external memory 17 as the reservation area ER.

Next, during step S2, the controller 10 determines which setting of orders of priority among the foregoing settings of orders of priority, first to fourth, is to be used, and in accordance with the determined setting of orders of priority, the controller 10 figures out an order of priority to be given to each of compressed music files stored in the music file storage area EA, and then, gives the order of priority to each of the compressed music files.

Next, during step S3, via the external memory controller 16, the controller 10 determines whether the reservation area ER, which was reserved during step S1 described above, has an unused area sufficient to newly save the decoded music file, or not. Further, when it is determined that the reservation area ER has an unused area sufficient to newly save the decoded music file, the controller 10 causes the flow to proceed to step S4, and when it is determined that the reservation area ER does not have an unused area sufficient to newly save the decoded music file, the controller 10 terminates the flow of processes shown in the flowchart of Fig. 5.

Subsequent to the foregoing step S3, during which it was determined that the reservation area ER does not have an unused area sufficient to newly save the decoded music file, the flow proceeds to step S4, where the controller 10 decodes a music file having the highest order of priority among the music files stored in the music file storage area EA, and saves the resultant decoded music file in the reservation area ER. In addition, in the case where, during step 4 in a previous cycle of the flow, a certain music file has already been decoded and saved in the reservation area ER, the controller 10 decodes a music file having an order of priority one rank lower than that of the above-described certain file.

Next, during step S5, via the charging controller 22, the controller 10 determines whether the condition in which the mobile telephone terminal is supplied with external electric power is continuously maintained, or not. Further, in the case where the condition in which the mobile telephone terminal is supplied with external electric power is continuously maintained, the controller 10 causes the flow to proceed to step S6, and in contrast, in the case where it is determined that the condition in which the mobile telephone terminal is supplied with external electric power is discontinued, the controller 10 terminates the flow of processes shown in the flowchart of fig. 5.

During the foregoing step S5, it is determined that the condition in which the mobile telephone terminal is supplied with external electric power is continuously maintained, and the flow proceeds to step S6, where, via the external memory controller 16, the controller 10 determines whether all of compressed music files each being given an order of priority among compressed music files stored in the music file storage area EA have been decoded during the foregoing step S4, or not. Further, in the case where there is at least one compressed music file, which has not yet been decoded, among compressed music files each being given an order of priority, the controller 10 returns the flow to step S3, while in the case where it is determined that the decoding of all of compressed music files each being given an order of priority has been completed, the controller 10 terminates the flow of processes shown in the flowchart of fig. 5.

In addition, during step S5, processing may be performed so that the controller 10 determines whether all of compressed music files stored in the compressed music file storage area have been decoded, or not, regardless of whether each of the compressed music files stored in the music file storage area is given an order of priority, or not. In this case, in the case where there is at least one compressed music file which has not yet been decoded among all of compressed music files stored in the music file storage area EA, the controller 10 returns the flow to step S3, while in the case where it is determined that the decoding of all of compressed music files has been completed, the controller 10 terminates the flow of processes.

### [A flowchart of a reproduction process with respect to music files while being supplied with electric power from a battery]

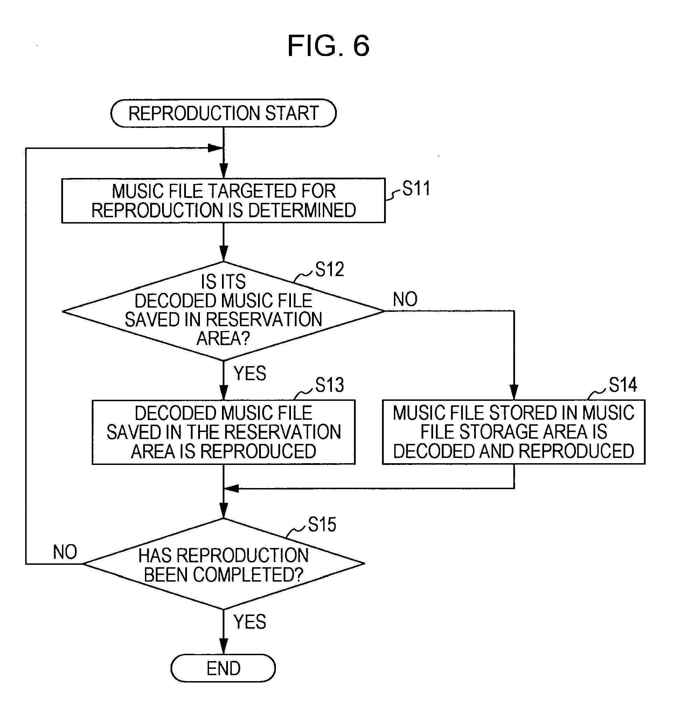

Fig. 6 is a flowchart illustrating a flow of processes performed in the case where, in the mobile telephone terminal according to an embodiment of the present invention, the reproduction of a music file is commenced while being supplied with electric power from the battery 23. In addition, processes shown in this flowchart of Fig. 6 are those performed in conjunction with the execution of an example of an information processing program according to the present invention, performed by the controller 10.

In this flowchart shown in Fig. 6, for example, when the mobile telephone terminal 10 receives an input command from a user, which directs the mobile telephone terminal to commence the reproduction of music files, and in order to commence the reproduction of the music files in accordance with the command, firstly, during step S11, the controller 10 determines a music file to be reproduced. Here, the music file to be reproduced is a music file the controller 10 selects as a music file to be reproduced from among individual music files which are sorted in accordance with, for example, music categories, artists, user settings or the like, further, individual music files which are arranged in an order according to, for example, titles, contents of registration or the like, or individual music files which are selected at random by means of a shuffle reproducing operation. In addition, the music file to be reproduced may be a music file a user manually selects.

Next, during step S12, via the external memory controller, the controller 10 determines whether a decoded music file corresponding to the music file selected during the foregoing step S11 is saved in the reservation area ER, or not. Further, in the case where the controller 10 determines that the decoded music file is saved in the reservation area ER, the controller 10 causes the flow to proceed to step S 13, while the controller 10 determines that the decoded music file is not saved in the reservation area ER, the controller 10 causes the flow to proceed to step S 14.

In the case where the flow proceeds to step S 13, the controller 10 reads out the decoded music file saved in the reservation area ER, further, digital-to-analog converts the data of the decoded music file, and then, outputs the resultant analog signals from the speaker 20.

In contrast, in the case where the flow proceeds to step S 14, the controller 10 causes the external memory controller 16 to read out a compressed music file corresponding to the music file determined during the foregoing step S11 from the music file storage area ER of the external memory 17 and decodes the read-out compressed music file. Further, the controller 10 digital-to-analog converts the data of the decoded music file, and then, outputs the resultant analog signals from the speaker 20.

Subsequently, during step S15, the controller 10 determines whether the reproduction of all of the music files which were determined to be reproduced during the foregoing step S11 has been completed, or not, and in the case where the reproduction of all of the music files has not yet been completed, the controller 10 returns the flow to step S11, and in the case where the reproduction of all of the music files has been completed, the controller 10 terminates the flow of processes shown in the flowchart of fig. 6.

### [Conclusion]

As described above, in this embodiment, the decoding of compressed music files and the saving of the resultant decoded music files into the reservation area (unused area) while being supplied with external electric power, and just the reproducing of the decoded music files saved in the reservation area without performing any other processes while being supplied with electric power from the battery 23 enable suppression of the consumption of electric power stored in the battery 23, thus, increase of a total amount of time while the battery 23 can continue to supply electric power, and increase of a total amount of time while the reproduction of pieces of music can be performed on an amount of electric power which can be stored in the battery 23 by one charging operation of the battery 23.

Furthermore, in this embodiment, when reproducing decoded music files saved in the reservation area ER, it is unnecessary for the controller 10 to perform the decoding process on a real-time basis, and thus, it is possible to reduce loading on processes performed by the controller 10, and further, increase the processing performance of the whole of the mobile telephone terminal.

Further, in this embodiment, when the saving of other different type of data is necessary, an area necessary for the saving of the other different type of data can be automatically released from the reservation area ER where decoded music files are saved, and thus, it is possible to avoid occurrence of the lack of memory due to the saving of decoded music files in advance, and users can use the reservation area ER as an unused area.

Further, in this embodiment, each decoded music file saved in the reservation area ER of the external memory is given a predetermined order of priory, therefore, has a high probability of being used in the reproduction of pieces of music performed subsequently, and thus, it is possible to reduce waste of decoding processes with respect to compressed music files while being supplied with external electric power, and achieve the efficient usage of the reservation area ER.

Additionally, the foregoing description of this embodiment is just an example to which the present invention is applied. Therefore, obviously, the present invention is not limited to each of the foregoing embodiments, and various modifications in accordance with designs or the like may be made appropriately within a scope not departing from technical ideas of the present invention.

In the foregoing embodiment, description was made by way of an example in which music files are reproduced, however, the present invention can be also applied to cases in which, for example, compressed moving-image files or compressed still-image files are reproduced. That is, in the mobile telephone terminal according to this embodiment, while being supplied with external electric power, compressed moving-image files or compressed still-image files are decoded and the resultant decoded files are saved in the reservation area. In this way, in subsequent operations in which the reproduction of compressed moving-image files or compressed still-image files are necessary, the reproduction of the decoded moving-image files or the decoded still-image files enables reduction of electric power necessary for decoding thereof, the electric power being consumed from the battery incorporated in the mobile telephone terminal. Further, in the decoding and the saving in the reservation area with respect to compressed moving-image files or compressed still-image files, in the same way as or in a way similar to that described above, the decoding and the saving thereof can be performed in accordance with orders of priority given to the compressed moving-image files or the compressed still-image files. In this case, the processes of giving the orders of priority can be also performed in accordance with methods of setting orders of priority the same as or similar to those described above.

Further, in the foregoing embodiment, the unused area ER of the external memory 17 is used as the reservation area ER, but, for example, in the case where an unused area also exists in the internal memory section 15, it is possible to use the unused area in the internal memory section 15 as a reservation area. In this case, it is possible to allocate two different reservation areas in respective unused areas of the external memory 17 and the internal memory section, 15 and appropriately handle the two different reservation areas, or alternatively, it is possible to handle both of the unused areas as one combined reservation area. Further, in the case where respective unused areas of the external memory 17 and the internal memory section 15 are handled as two different reservation areas, it is possible to set orders of priority to respective reservation areas, and firstly use one of the reservation areas which is given a higher order of priority.

Further, the present invention can be applied to an example in which, pieces of first data, i.e., original highly compressed music files, are re-encoded into low compressed music files as a predetermined process, and the low compressed music files are saved in the reservation area as pieces of second data. In this example, when the controller 10 reads out the low compressed music files, the controller 10 performs decoding thereof.

That is, in the case where an amount of electric power consumed in decoding of the low compressed music files is smaller than that in decoding of original highly compressed music files, the mobile telephone terminal including such a function as described above enables optimization of a balance between a storage capacity of the reservation area and an amount of electric power consumed in the reproduction of music files, and thus, harmonization between the saving of music files as many as possible and the suppression of an amount of electric power consumed from electric power stored in the battery to a greater degree.

More specific description of the foregoing function is such that, in general, in comparison of the number of decoded music files savable in the reservation area with the number of re-encoded low compressed music files savable in the same reservation area, it can be considered that the latter case enables a larger number of music files to be saved in the reservation area. That is, in this example, although an amount of electric power larger than that in the foregoing case where decoded music files are saved in the reservation area is consumed, the number of music files larger than that in the foregoing case where decoded music files are saved in the reservation area can be saved, and thus, it is possible to perform optimization of both the efficient usage of the reservation area and the efficient consumption of electric power from the battery.

Obviously, taking into consideration the efficient usage of the reservation area and an amount of electric power consumed from electric power stored in the battery, it is also possible to cause the decoded music files and the low compressed re-encoded music files to coexist and be saved in the reservation area.

In addition thereto, in the mobile telephone terminal according to this embodiment, handling may be performed so that the decoded pieces of data generated when reproducing compressed music files are saved in the reservation area.

Further, the present invention is not limited to mobile telephone terminals, but can be applied to various kinds of devices in which encoded files are decoded and reproduced.

Furthermore, in this embodiment, an example in which encoding and decoding are performed for compression and decompression, respectively, is provided, however, the present invention is not limited to this example, but can be applied to cases in which other kinds of encoding and decoding are performed. Moreover, the present invention is not limited to the processes of encoding and decoding, but can be applied to all cases in which, by performing a predetermined process with respect to a piece of first data, the predetermined process consuming electric power, the piece of first data is converted into a piece of second data.

It should be understood by those skilled in the art that various modifications, combinations, sub-combinations and alterations may occur depending on design requirements and other factors insofar as they are within the scope of the appended claims.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1. A mobile information terminal, comprising:
a battery section configured to supply electric power;
an external electric power supplying section configured to be supplied with external electric power through a connecting section thereof which is configured so as to be capable of being connected to an external electric power source;
a data processing section configured to perform a predetermined processing with respect to a piece of first data so as to convert the piece of first data into a piece of second data;
a data recording section configured to record at least one piece of data;
a data saving controller configured to, while being supplied with external electric power through the external electric power supplying section, cause the data processing section to perform the predetermined processing with respect to at least one piece of first data recorded in the data recording section, and save at least one piece of second data resulting from performing the predetermined processing into the data recording section; and
a data outputting controller configured to, while being supplied with electric power from only the battery section, be directed to perform the predetermined processing with respect to a piece of first data recorded in the data recording section, and in the case where the piece of first data targeted for the direction is a piece of first data corresponding to the piece of second data saved in the data recording section, read out the corresponding piece of second data saved in the data recording section.

2. The mobile information terminal according to claim 1, further comprising:
a reservation area reserving section configured to reserve an unused area in the data recording section as a reservation area which saves therein at least one piece of second data resulting from performing the predetermined processing with respect to at least one piece of first data recorded in the data recording section, and further, is automatically released when a new piece of third data is recorded into the data recording section; and
a reservation area determining section configured to determine whether a size of the reservation area in the data recording area is larger than or equal to an estimated amount of data resulting from performing the predetermined processing with respect to the at least one piece of first data, or not;
wherein, while being supplied with external electric power through the external electric power supplying section, in the case where it is determined by the reservation area determining section that the size of the reservation area is larger than or equal to the estimated amount of data, the data saving controller saves the at least one piece of second data resulting from performing the predetermined processing into the saving area, and
wherein, in the case where the piece of first data targeted for the direction is a piece of first data corresponding to the piece of second data saved in the data recording section, the data outputting controller reads out the corresponding piece of second data saved in the reservation area.

3. The mobile information terminal according to claim 2, wherein, in the case where the at least one piece of first data includes a plurality of pieces of first data, and the pieces of first data are recorded in the recording section, the data saving controller causes the data processing section to sequentially perform the predetermined processing with respect to the pieces of first data recorded in the data recording section in accordance with predetermined orders of priority which are given to the pieces of first data, respectively, the predetermined processing being commenced from a piece of first data given the highest order of priority, and subsequently, being sequentially performed with respect to a piece of first data given an order of priority lower than that of an immediately previously processed piece of first data, and saves pieces of second data resulting from performing the predetermined processing into the reservation area.

4. The mobile information terminal according to claim 2, wherein, in the case where the at least one piece of second data includes a plurality of pieces of second data, and the pieces of second data are saved in the reservation area, when a new piece of third data is recorded into the data recording section, the reservation area reserving section partially releases the reservation area by sequentially deleting the pieces of second data saved in the reservation area in accordance with predetermined orders of priority which are given to the pieces of second data, respectively, the deletion being commenced from a piece of second data given the lowest order of priority, and subsequently, being sequentially performed with respect to a piece of second data given an order of priority higher than that of an immediately previously deleted piece of second data.

5. The mobile information terminal according to claim 3 or 4, wherein the predetermined orders of priority are either orders of priority preset by a user, orders of priority in accordance with a day and time when each of the pieces of first data is recorded into the data recording section, orders of priority in accordance with a processing frequency as of then regarding the predetermined processing performed with respect to each of the pieces of first data recorded in the data recording section, or orders of priority in accordance with orders determined by a shuffling list created in advance.

6. The mobile information terminal according to any of claims 2 to 5, wherein the piece of first data is a piece of encoded data, further, the predetermined processing is a decoding processing with respect to the piece of encoded data, and the piece of second data is a piece of data resulting from the decoding processing.

7. An information processing program that causes a computer included in a mobile information terminal to fulfill a function of the mobile information terminal comprising:
a data processing section configured to perform a predetermined processing with respect to a piece of first data so as to convert the piece of first data into a piece of second data;
a data saving controller configured to, while being supplied with external electric power from an external electric power supplying section having a connecting section configured so as to be capable of being connected to an external electric power source and being supplied with external electric power through the connecting section, cause the data processing section to perform the predetermined processing with respect to at least one piece of first data recorded in the data recording section, and save at least one piece of second data resulting from performing the predetermined processing into the data recording section; and
a data outputting controller configured to, while being supplied with electric power from only a battery section, be directed to perform the predetermined processing with respect to a piece of first data recorded in the data recording section, and in the case where the piece of first data targeted for the direction is a piece of first data corresponding to the piece of second data saved in the data recording section, read out the corresponding piece of second data saved in the data recording section.

8. An information processing method, comprising the steps of:
saving performed by a data saving controller, in which, while being supplied with external electric power from an external electric power supplying section having a connecting section configured so as to be capable of being connected to an external electric power source and being supplied with external electric power through the connecting section, the data saving controller causes a data processing section to perform a predetermined processing with respect to at least one piece of first data recorded in a data recording section, and saves at least one piece of second data resulting from performing the predetermined processing into the data recording section; and
reading out performed by a data outputting controller, in which, while being supplied with electric power from only a battery section, the data outputting controller is directed to perform the predetermined processing with respect to a piece of first data recorded in the data recording section, and in the case where the piece of first data targeted for the direction is a piece of first data corresponding to the piece of second data saved in the data recording section, the data outputting controller reads out the corresponding piece of second data saved in the data recording section.
